# EUROPÄISCHE PATENTSCHRIFT

(11) **EP 3 347 238 B1**
(45) Veröffentlichungstag und Bekanntmachung des Hinweises auf die Patenterteilung: **06.09.2023**
(21) Anmeldenummer: 16763059.9
(22) Anmeldetag: 09.09.2016
(51) Int. Cl.: B60N 2/68, B60N 2/70, B60N 2/42, B60N 2/60

(54) **SITZELEMENT FÜR EINEN FAHRZEUGSITZ UND VERFAHREN ZU DESSEN HERSTELLUNG**
SEAT ELEMENT FOR A VEHICLE SEAT AND METHOD FOR THE PRODUCTION THEREOF
ÉLÉMENT DE SIÈGE POUR SIÈGE DE VÉHICULE ET PROCÉDÉ DE FABRICATION ASSOCIÉ

(30) Priorität: 11.09.2015 DE 102015217467; 21.12.2015 DE 102015226302
(43) Veröffentlichungstag der Anmeldung: 18.07.2018
(73) Patentinhaber: Adient US LLC, Plymouth, MI 48170 (US)
(72) Erfinder: OUENNA, Loutfi, 75015 Paris (FR); LEPAGE, Rémy, 92100 Boulogne Billancourt (FR)
(74) Vertreter: Liedtke & Partner Patentanwälte
(86) Internationale Anmeldenummer: PCT/EP2016/071319
(87) Internationale Veröffentlichungsnummer: WO 2017/042339

(56) Entgegenhaltungen:
- WO-A1-2010/045571
- WO-A1-2013/156788
- DE-A1-102014 112 282
- JP-A- H08 256 874
- JP-A- S55 146 119
- JP-A- 2013 099 996
- JP-B2- 5 834 314
- US-A- 3 537 751
- US-A- 3 729 228

## Beschreibung

Die Erfindung betrifft ein Sitzelement für einen Fahrzeugsitz. Die Erfindung betrifft weiterhin ein Verfahren zur Herstellung eines solchen Sitzelementes.

Aus dem Stand der Technik sind allgemein Sitzelemente und Verfahren zur Herstellung eines Sitzbezuges sowie Sitzbezüge für Sitzelemente bekannt.

Beispielsweise ist in DE 10 2008 037 231 A1 ein Fahrzeugsitzelement für einen Fahrzeugsitz offenbart. Das Fahrzeugsitzelement umfasst mindestens einen Polsterkern aus einem Weichschaum und ein rückseitig des Polsterkerns angeordnetes, mit dem Polsterkern verbundenes formstabiles Stützelement aus einem Hartschaum zum Stützen zumindest eines Teilbereiches des Polsterkerns, wobei Polsterkern und/oder Stützelement eine rückseitige Aussparung ausbilden, die ein rückseitiges Einsetzen eines Rahmens bei verbundenen Polsterkern und Stützelement ermöglicht.

Aus der WO 2013/156788 A1 ist ein Flugzeugsitz bekannt, welcher eine Sitzlehne umfasst, die aus einem Stützrahmen und einer Rückenwand gebildet ist.

Ein weiteres Fahrzeugsitzelement für einen Fahrzeugsitz ist aus der JP H08256874 A bekannt.

Der Erfindung liegt die Aufgabe zu Grunde, ein gegenüber dem Stand der Technik verbessertes Sitzelement für einen Fahrzeugsitz und ein geeignetes Verfahren zu dessen Herstellung anzugeben.

Hinsichtlich des Sitzelementes wird die Aufgabe erfindungsgemäß mit den in Anspruch 1 angegebenen Merkmalen gelöst. Hinsichtlich des Verfahrens wird die Aufgabe erfindungsgemäß mit den in Anspruch 4 angegebenen Merkmalen gelöst.

Vorteilhafte Ausgestaltungen der Erfindung sind Gegenstand der Unteransprüche.

Ein erfindungsgemäßes Sitzelement für einen Fahrzeugsitz umfasst eine thermisch geformte Rückwand und eine Trägerstruktur, die auf einer Oberflächenseite der Rückwand angeordnet ist. Dabei ist die Trägerstruktur auf der von der Rückwand abgewandten Oberflächenseite mit einem Schaumelement versehen, das sich in Längsausdehnung über die Trägerstruktur hinaus in Richtung der Rückwand erstreckt und in einem vertikalen Abstand zur Rückwand verläuft. Die Rückwand weist eine Ausformung auf, die als eine in Richtung des Schaumelements verlaufende Materialaussparung ausgebildet ist.

Das erfindungsgemäße Sitzelement ist beispielsweise eine Rückenlehne für einen vorderen Fahrzeugsitz und zeichnet sich durch eine besonders geringe Dicke und ein besonders geringes Gewicht aus.

Gemäß einer Ausgestaltung der Erfindung ist die Trägerstruktur zur Rückwand mit einem horizontalen Trägerabstand beabstandet angeordnet. Dabei ist die Trägerstruktur beispielsweise mittels einer Anzahl von Befestigungselementen an der Rückwand befestigt, wobei die Befestigungselemente gleichzeitig als Abstandshalter verwendbar sind.

Gemäß einer weiteren Ausgestaltung der Erfindung ist an der Trägerstruktur auf einer vom Schaumelement abgewandten Oberflächenseite ein Dämpfungselement angeordnet. Das Dämpfungselement ist beispielsweise eine Matte, die ebenfalls in einem horizontalen Trägerabstand zur Rückwand angeordnet ist. Mittels des Dämpfungselements kann ein Sitzkomfort für das Sitzelement verbessert werden.

Des Weiteren weist die Rückwand vorzugsweise eine Ausformung auf, die als eine in Richtung des Schaumelements verlaufende Materialaussparung ausgebildet ist. Die Ausformung bildet dabei einen Freiraum, welcher eine größere Beinfreiheit für eine dahinter sitzende Person ermöglicht. Zudem weist das Sitzelement mittels der Ausformung eine besonders geringe Dicke auf.

Gemäß einer weiteren Ausgestaltung der Erfindung weisen das Schaumelement und die Trägerstruktur seitlich einen Ausschnitt zur Aufnahme eines Seiten-Airbagmoduls auf. Vorzugsweise ist das Seiten-Airbagmodul derart in den Ausschnitt eingepasst und an der Trägerstruktur befestigt, dass dieses im montierten Zustand bündig mit einer Kontur des Sitzelements abschließt.

Darüber hinaus ist das Sitzelement bevorzugt mit einem vorderseitigen Sitzbezug und einem rückseitigen Sitzbezug versehen, die miteinander verbunden sind. Beispielsweise sind die Sitzbezüge an Nahtlinien mittels nach außen nicht sichtbarer Verschlusselemente, zum Beispiel Nähten oder Reißverschluss, miteinander verbunden. Die Sitzbezüge bedecken besonders bevorzugt die Rückseite bzw. Vorderseite und auch die Seitenflächen des Sitzelements vollständig.

Zur Herstellung eines erfindungsgemäßen Sitzelements ist ein Verfahren vorgesehen, bei welchem die Rückwand als ein Kunststoffformteil ausgebildet und die Trägerstruktur mit dem Schaumelement versehen wird und bei dem anschließend die Rückwand an der Trägerstruktur positioniert und befestigt wird.

Das Verfahren ermöglicht somit auf einfache Art und Weise die Herstellung eines Sitzelements, welches gegenüber dem Stand der Technik eine geringe Dicke und ein geringeres Gewicht aufweist.

Bevorzugt wird die Rückwand in einem Heißpressverfahren hergestellt. Dies ermöglicht die Herstellung einer Vielzahl von Rückwänden mit vergleichbaren Materialeigenschaften, wobei eine Qualität der hergestellten Rückwände optimiert wird.

Auf eine nach außen gerichtete Oberfläche der Rückwand wird ein rückseitiger Bezug aufkaschiert. Dieser wird gemäß einer Ausgestaltung des Verfahrens mit einem vorderseitigen Bezug verbunden, welcher auf und über die Rückwand, die Trägerstruktur und das Schaumelement gezogen und punktweise befestigt wird. Beispielsweise werden die Sitzbezüge entlang von Nahtlinien mittels nicht sichtbarer Reißverschlüsse miteinander verbunden.

Ausführungsbeispiele der Erfindung werden anhand von Zeichnungen näher erläutert. Dabei zeigen:
- Figur 1A bis 1B: schematisch in perspektivischer Ansicht von hinten eine Ausführungsform einer Rückwand eines Sitzelements mit und ohne Bezug,
- Figur 2A bis 2D: schematisch in perspektivischer Ansicht von hinten eine Ausführungsform eines als Rückenlehne ausgebildeten Sitzelements mit einer Rückwand und einer auf der Vorderseite angeordneten Trägerstruktur mit einem Schaumelement,
- Figur 3: schematisch in perspektivischer Ansicht von hinten eine Ausführungsform eines als Rückenlehne ausgebildeten Sitzelements mit einem Lehnenverstellmechanismus,
- Figur 4: schematisch im Längsschnitt ein als Rückenlehne ausgebildetes Sitzelement,
- Figur 5: schematisch in perspektivischer Ansicht von hinten ein als Rückenlehne ausgebildetes Sitzelement mit einer Rückwand und einem auf der Vorderseite der Rückwand angeordneten Schaumelement,
- Figur 6: schematisch im Querschnitt ein als Rückenlehne ausgebildetes Sitzelement,
- Figur 7: schematisch in perspektivischer Seitenansicht ein als Rückenlehne ausgebildetes Sitzelement mit einer Rückwand und einem auf der Vorderseite angeordneten Schaumelement,
- Figur 8: schematisch in einer anderen perspektivischen Seitenansicht ein als Rückenlehne ausgebildetes Sitzelement mit einer Rückwand und einem auf der Vorderseite angeordneten Schaumelement,
- Figur 9: schematisch einen Ausschnitt eines Längsschnitts eines als Rückenlehne ausgebildeten Sitzelementes im Bereich einer Kopfstützenaufnahme,
- Figur 10: schematisch einen Ausschnitt eines Querschnitts eines als Rückenlehne ausgebildeten Sitzelementes im Bereich einer Airbagaufnahme,
- Figur 11: schematisch einen Ausschnitt einer Ansicht von hinten eines als Rückenlehne ausgebildeten Sitzelementes im Bereich einer Airbagaufnahme,
- Figur 12: schematisch einen Querschnitt eines als Rückenlehne ausgebildeten Sitzelementes im Verbindungsbereich von Rückwand und Trägerstruktur,
- Figur 13: schematisch einen Ausschnitt eines Längsschnitts eines als Rückenlehne ausgebildeten Sitzelementes im Verbindungsbereich von Rückwand und Trägerstruktur,
- Figur 14: schematisch einen Querschnitt eines als Rückenlehne ausgebildeten Sitzelementes im Bereich einer Airbagaufnahme,
- Figur 15: schematisch eine Seitenansicht eines als Rückenlehne ausgebildeten Sitzelementes auf der Airbagseite,
- Figur 16: schematisch eine Seitenansicht eines als Rückenlehne ausgebildeten Sitzelementes auf der zur Airbagseite gegenüberliegenden Seite,
- Figur 17: schematisch ein Schichtaufbau der Rückwand nach einem Herstellungsprozess und
- Figur 18: schematisch die Herstellung einer Rückwand für ein Sitzelement.

Einander entsprechende Teile sind in allen Figuren mit den gleichen Bezugszeichen versehen.

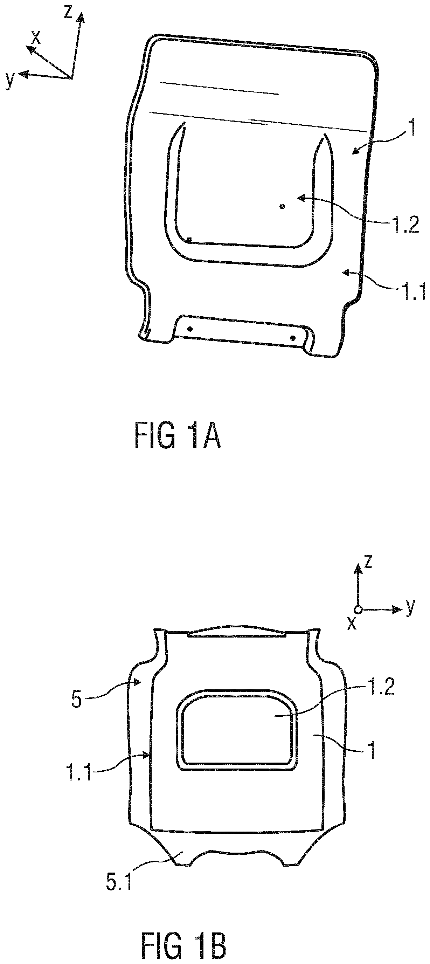

Zur besseren Veranschaulichung ist in den Figuren 1 bis 16 ein Koordinatensystem mit drei Koordinatenachsen x, y, z gezeigt.

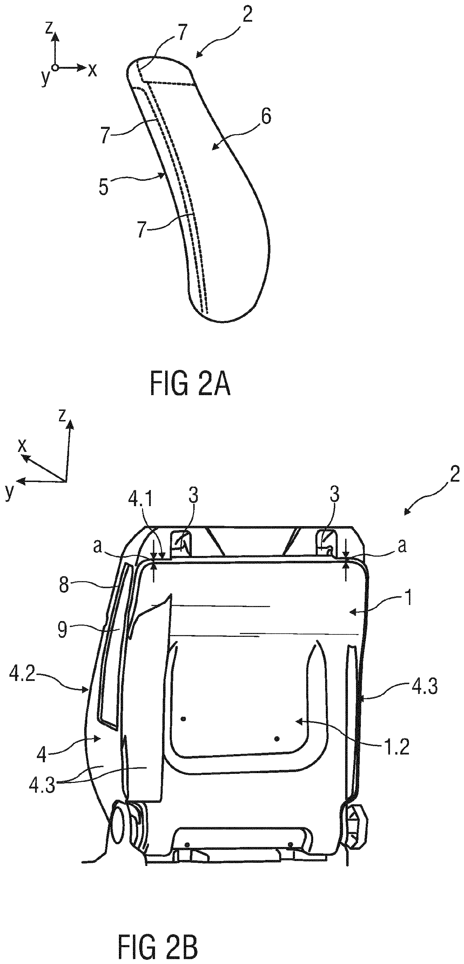

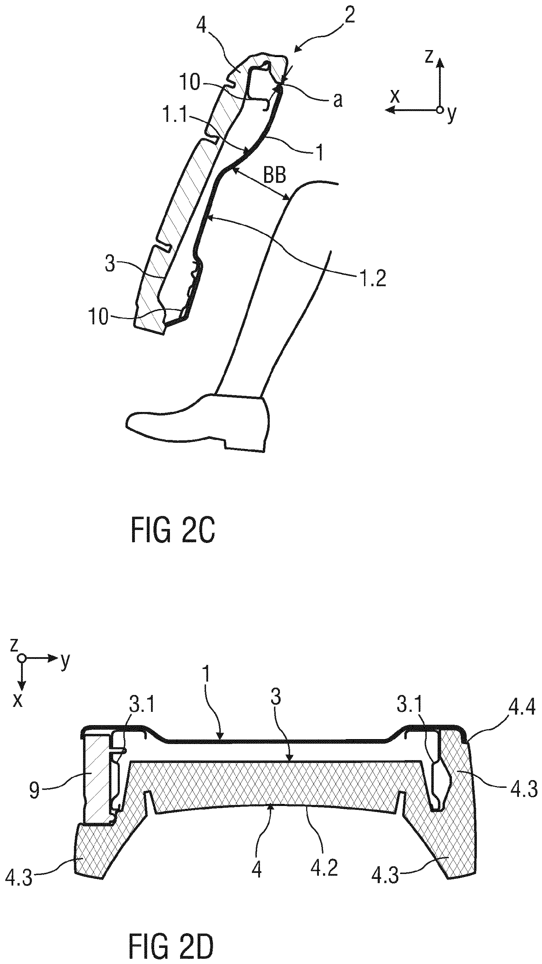

**Figuren 1A und 1B** zeigen jeweils schematisch in perspektivischer Ansicht von hinten eine Ausführungsform einer Rückwand 1 eines in Figur 2 dargestellten Sitzelements 2.Insbesondere ist in den Ausführungsformen eine nach außen gerichtete Oberfläche 1.1 der Rückwand 1 gezeigt.

Die Rückwand 1 ist beispielsweise als ein Formteil, insbesondere ein Kunststoffteil gebildet. Des Weiteren ist die Rückwand 1 beispielsweise aus einem faserverstärkten Kunststoff, insbesondere aus Polypropylen mit Faseranteilen, insbesondere Glasfaseranteilen von beispielsweise 70%, gebildet und wird in einem Heißpressverfahren hergestellt.

In Figur 1A ist das Formteil der Rückwand 1 ohne Bezugsstoff dargestellt. Hierdurch ist eine in die Rückwand 1 eingebrachte Ausformung 1.2 deutlich zu erkennen.

In Figur 1B ist die Rückwand 1 mit einem aufkaschierten Bezug 5 auf der nach außen gerichteten Oberfläche 1.1 der Rückwand 1 gezeigt. Der Bezug 5 ist im zugeschnittenen Zustand dargestellt und weist einen die Rückwand 1 überstehenden Bereich 5.1 auf, um den rückseitigen Bezug 5 des Sitzelements 2 mit einem vorderseitigen Bezug 6, der in Figur 2A dargestellt ist, zu verbinden, beispielsweise mittels eines Verschlusselementes, z. B. eines Reißverschlusses, entlang von Nahtlinien 7.

**Figuren 2A und 2B** zeigen schematisch in perspektivischer Ansicht von der Seite und von hinten das Sitzelement 2. Das Sitzelement 2 ist beispielsweise eine Rückenlehne eines vorderen Fahrzeugsitzes. In Figur 2A ist das Sitzelement 2 mit dem rückseitigen Bezug 5 und den vorderseitigen Bezug 6 dargestellt. In Figur 2B ist das Sitzelement 2 zur besseren Übersichtlichkeit des inneren Aufbaus ohne die Bezüge 5 und 6 dargestellt.

Figur 2A zeigt die Bezüge 5 und 6, die insbesondere jeweils einteilig ausgebildet sind und an den Nahtlinien 7 mittels nach außen nicht sichtbarer Verschlusselemente, zum Beispiel Nähten oder Reißverschluss, miteinander verbunden sind. Die Bezüge 5 und 6 bedecken die Rückseite bzw. Vorderseite und auch die beiden Seitenflächen des Sitzelements 2 vollständig.

Figur 2B zeigt das Sitzelement 2 ohne Bezüge 5 und 6. Das Sitzelement 2 umfasst eine Trägerstruktur 3, die in Figur 2B nur teilweise dargestellt ist. Die Trägerstruktur 3 ist als ein Blech-Formteil ausgebildet und bildet die Tragstruktur des Sitzelements 2. Die Trägerstruktur 3 kann dabei einteilig als ein Rahmenformbauteil ausgebildet sein. Alternativ kann die Trägerstruktur 3 mehrteilig aus miteinander verbundenen Rahmenteilen geformt und gebildet sein.

Nach vorn in x-Richtung ist die Trägerstruktur 3 von einem Schaumelement 4 abgedeckt. In z-Richtung steht das Schaumelement 4 über die Rückwand 1 über und ist derart geformt, insbesondere angeschrägt oder gefast, dass ein überstehender Schaumrand 4.1 in einem Abstand a zur Rückwand 1 angeordnet ist.

Die Rückwand 1 bildet den hinteren Abschluss des Sitzelements 2. Das Schaumelement 4 bildet den vorderen Abschluss des Sitzelements 2, eine Rücken-Anlagefläche 4.2 sowie Seitenwülste 4.3. Die Seitenwülste 4.3 können dabei zusätzlich zumindest bereichsweise nach hinten gezogen sein und die Rückwand 1 bereichsweise überdecken.

Das Schaumelement 4 und die darunter teilweise sichtbare Trägerstruktur 3 weisen im Seitenbereich auf einer Seite des Sitzelements 2 einen Ausschnitt 8 auf. In diesem Ausschnitt 8 ist bündig mit der Rückwand 1 und dem Schaumelement 4 ein Seiten-Airbagmodul 9 angeordnet.

**Figur 2C** zeigt das Sitzelement 2 im Längsschnitt. Wie bereits zuvor erwähnt, ist das Sitzelement 2 beispielsweise eine Rückenlehne eines vorderen Fahrzeugsitzes. Die Rückwand 1 des Sitzelements 2 weist somit beispielsweise die Ausformung 1.2 zur Bildung eines größeren Beinbereichs BB für eine dahinter sitzende Person auf.

Das Sitzelement 2 umfasst die thermisch geformte, insbesondere heißpressgeformte Rückwand 1 und die Trägerstruktur 3, die auf einer in x-Richtung nach vorne weisenden Oberfläche der Rückwand 1 angeordnet und an dieser formschlüssig oder kraftschlüssig befestigt ist. Die Trägerstruktur 3 ist an der Rückwand 1 mittels Befestigungselementen 10, beispielsweise mittels Rast- oder Klipselementen, Bügelelementen oder Schrauben befestigt.

Die Trägerstruktur 3 ist auf der von der Rückwand 1 abgewandten Oberflächenseite mit dem Schaumelement 4 versehen, das sich in Längsausdehnung (z-Richtung) über die Trägerstruktur 3 hinaus in Richtung der Rückwand 1 erstreckt und im Abstand a zur Rückwand 1 angeordnet ist.

**Figur 2D** zeigt das Sitzelement 2 im Querschnitt im Bereich des Seiten-Airbagmoduls 9. Dabei ist die Trägerstruktur 3 derart geformt, dass diese im Bereich der Rücken-Anlagefläche 4.2 in einem Abstand zur Rückenwand 1 angeordnet ist und seitlich beispielsweise mit abgebogenen Seitenrändern 3.1 an der Rückwand 1 anliegt und mit dieser verbunden ist. Die Trägerstruktur 3 ist beispielsweise rahmenförmig ausgestaltet. Dabei kann mittig eine plattenförmige Trägereinheit ausgebildet sein.

Die Rückwand 1 ist randseitig derart geformt, insbesondere abgewinkelt, dass diese in einer Ebene mit den Seitenwülsten 4.3 des Schaumelements 4 abschließt. Hierzu weist zumindest der betreffende Bereich des Seitenwulstes 4.3 einen Absatz 4.4 auf.

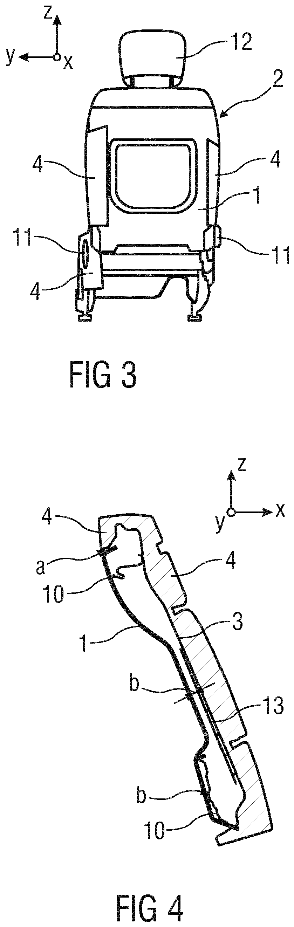

**Figur 3** zeigt schematisch in perspektivischer Ansicht von hinten eine Ausführungsform eines als Rückenlehne ausgebildeten Sitzelements 2 ohne Bezüge 5, 6 und mit einem an dem Schaumelement 4 angeordneten Lehnenverstellmechanismus 11 sowie einer Kopfstütze 12.

**Figur 4** zeigt schematisch im Längsschnitt ein als Rückenlehne ausgebildetes Sitzelement 2. Dabei erstreckt sich der Schaumkörper oder das Schaumelement 4 in x-Richtung auf der gesamten Vorderseite der Trägerstruktur 3 und überdeckt diese in z-Richtung im oberen Bereich des Sitzelements 2 mit einem vorgegebenen Abstand a, von beispielsweise 3 mm, insbesondere von 5 mm.

Darüber hinaus ist die metallische Trägerstruktur 3 zur Rückwand 1 mit einem Trägerabstand b beabstandet angeordnet. Der minimale Trägerabstand b zur Rückwand 1 beträgt 3 mm. Entsprechend sind die Befestigungselemente 10 zusätzlich als Abstandshalter ausgebildet. Auch können separate Abstandshalter vorgesehen sein.

Zusätzlich kann an der Trägerstruktur 3 auf der vom Schaumelement 4 abgewandten Oberflächenseite ein Dämpfungselement 13, insbesondere eine Matte angeordnet sein, die ebenfalls in einem Trägerabstand b zur Rückwand 1 angeordnet ist. Der Trägerabstand b des Dämpfungselementes 13 zur Rückwand 1 beträgt beispielsweise 15 mm.

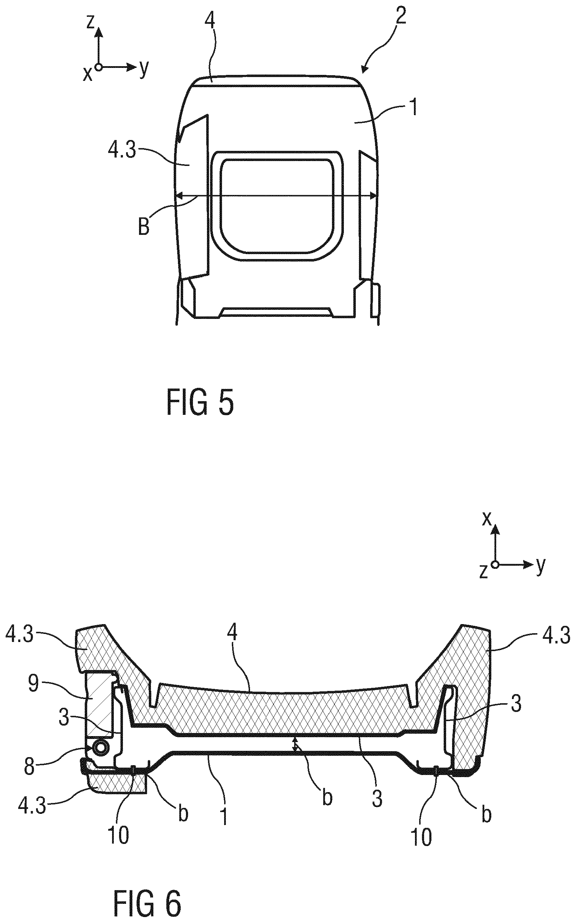

**Figur 5** zeigt schematisch in perspektivischer Ansicht von hinten das Sitzelement 2 mit der Rückwand 1 und dem auf der Vorderseite der Rückwand 1 angeordneten Schaumelement 4. Dabei weisen die Rückwand 1 und das Schaumelement 4 im Wesentlichen die gleiche Breite B auf, so dass eine bündige Außenkontur des Sitzelements 2 ermöglicht ist.

**Figur 6** zeigt schematisch im Querschnitt das Sitzelement 2 mit der umgreifenden Rückwand 1, den Trägerabständen b, den als Abstandshalter ausgebildeten Befestigungselementen 10 und dem Seiten-Airbagmodul 9.

Das Seiten-Airbagmodul 9 ist derart in den Ausschnitt 8 eingepasst und an der Trägerstruktur 3 befestigt, dass dieses im montierten Zustand bündig mit dem Seitenwulst 4.3 des Schaumelements 4 und dem abgebogenen Rand der Rückwand 1 abschließt.

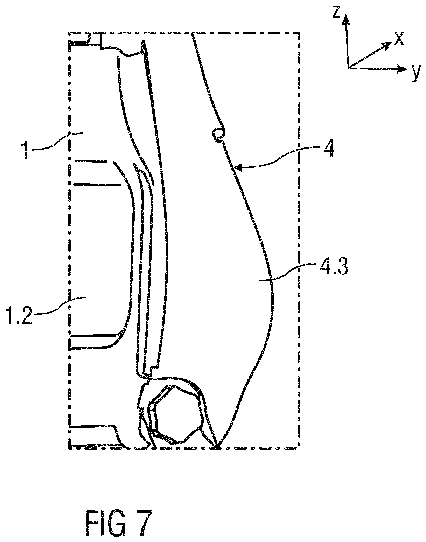

**Figur 7** zeigt schematisch in perspektivischer Seitenansicht das Sitzelement 2 mit der Rückwand 1 und dem auf der Vorderseite der Trägerstruktur 3 angeordneten Schaumelement 4, dessen Seitenwulst 4.3 auf der dem Seiten-Airbagmodul 9 gegenüberliegenden Seite nach hinten in Richtung der Rückwand 1 gezogen ist.

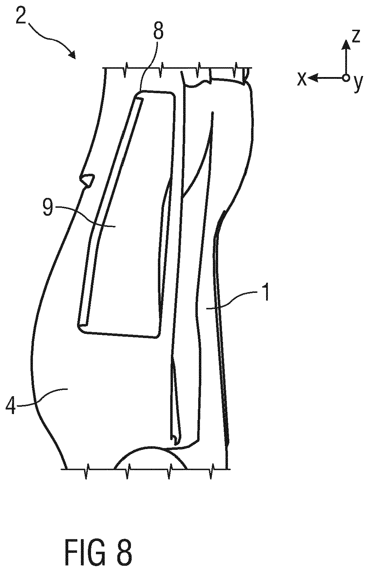

**Figur 8** zeigt schematisch das Sitzelement 2 in einer anderen perspektivischen Seitenansicht, insbesondere auf der Seite des Seiten-Airbagmoduls 9. Das Schaumelement 4 weist den Ausschnitt 8 zur Aufnahme des Seiten-Airbagmodules 9 auf.

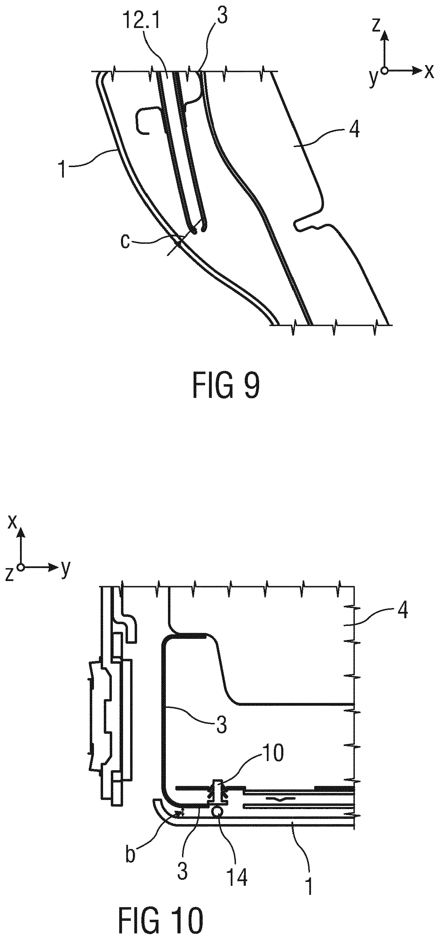

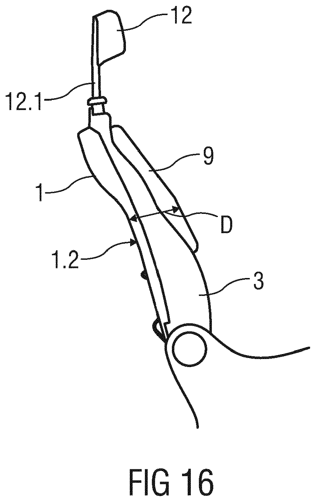

**Figur 9** zeigt schematisch einen Ausschnitt eines Längsschnitts des Sitzelementes 2 im Bereich einer Kopfstützenaufnahme 12.1 für eine Kopfstütze 12, wie sie beispielhaft in Figur 3 oder in Figur 16 gezeigt ist.

Hierbei ist die Kopfstützenaufnahme 12.1 in einem vorgegebenen Wandabstand c zur Rückwand 1 angeordnet. Der Wandabstand c beträgt beispielsweise 10 mm.

**Figur 10** zeigt schematisch einen Ausschnitt eines Querschnitts des Sitzelementes 2 im Bereich einer Airbagaufnahme.

Das Befestigungselement 10 ist als Abstandshalter ausgebildet, so dass die Trägerstruktur 3 in einem vorgegebenen Trägerabstand b zur Rückwand 1 angeordnet ist sowie einen Freiraum für die Aufnahme eines Airbagkabels 14 bildet.

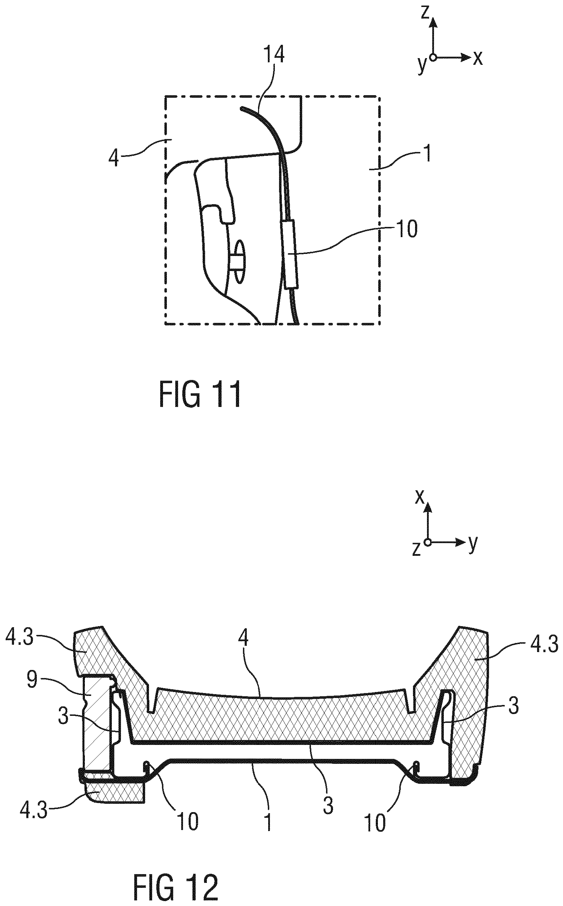

**Figur 11** zeigt perspektivisch einen Ausschnitt aus dem Sitzelement 2, wobei eine Führung des Airbagkabels 14 im Befestigungselement 10 nach Figur 10 gezeigt ist.

**Figuren 12 bis 14** zeigen schematisch im Querschnitt und im Längsschnitt das Sitzelement 2 mit einer alternativen Befestigung der Trägerstruktur 3 an der Rückwand 1. Die Befestigungselemente 10 sind als Abstandsbügel, insbesondere als ein J- oder U-Bügel, ausgebildet.

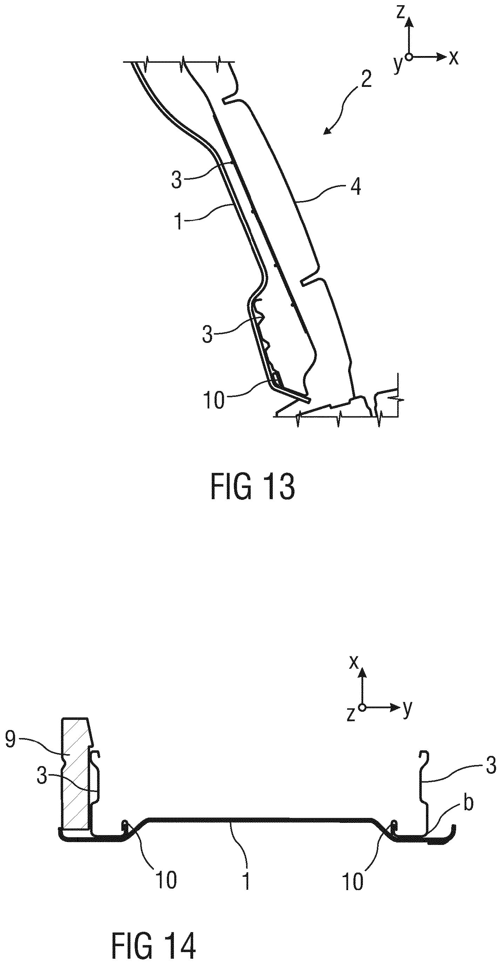

In Figur 14 ist gezeigt, dass die Rückwand 1 im Bereich des Seiten-Airbagmoduls 9 zu diesem beanstandet angeordnet ist. Auf der gegenüberliegenden Seite ist die Rückwand 1 im Trägerabstand b zur Trägerstruktur 3 angeordnet.

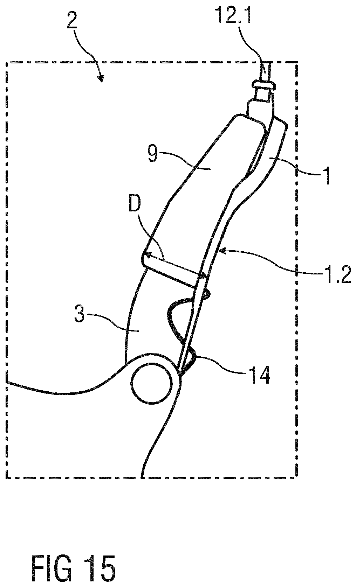

**Figuren 15** **und** **16** zeigen schematisch Seitenansichten des Sitzelementes 2. Das Sitzelement 2 ist ohne Polster oder Schaumelemente 4 und Bezüge 5 und 6 dargestellt und umfasst die als Formbauteil ausgebildete Rückwand 1 und die Trägerstruktur 3 sowie das an dieser Trägerstruktur 3 gehaltene Seiten-Airbagmodul 9.

Die Figuren 15 und 16 zeigen deutlich den durch die Ausformung 1.2 in der Rückwand 1 gebildeten Freiraum, welcher eine größere Beinfreiheit für eine dahinter sitzende Person ermöglicht. Zudem weist das Sitzelement 2 eine besonders dünne Dicke D auf.

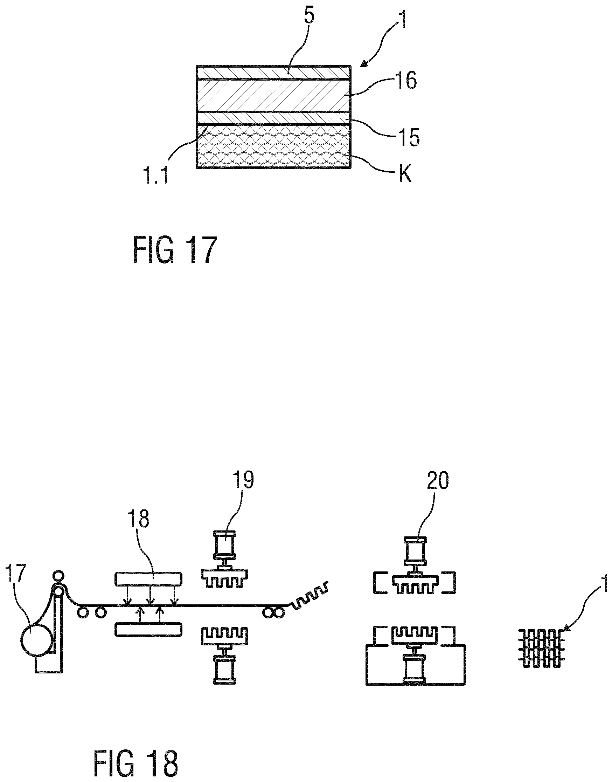

**Figuren 17 und 18** zeigen die Herstellung und den Aufbau der Rückwand 1 mit dem Bezug 5 im Detail. Dabei ist die Rückwand 1 in Figur 17 vergrößert dargestellt.

Die Rückwand 1 ist als ein Kunststoffformteil K, beispielsweise aus einem faserverstärkten Kunststoff, insbesondere aus Polypropylen mit Faseranteilen, insbesondere Glasfaseranteilen von beispielsweise 70%, gebildet. Auf die nach außen gerichtete Oberfläche 1.1 der Rückwand 1 ist der Bezug 5 aufkaschiert.

Die Rückwand 1 kann in einem Heißpressverfahren, welches beispielhaft in Figur 18 dargestellt ist, hergestellt werden. Hierbei sind eine Materialrolle 17, ein Erhitzer 18, eine Stempeleinheit 19 und eine Pressmaschine 20 gezeigt, mittels welcher die Kontur der Rückwand 1 mit der Ausformung 1.2 hergestellt wird.

Anschließend wird der Bezug 5 auf das Kunststoffformteil K mittels eines Klebers 15 und einer Schaumkaschierung 16 kaschiert, wie es Figur 17 beispielhaft zeigt.

Auch kann die Rückwand 1 mit ihrer Ausformung 1.2 und dem aufkaschiertem Bezug 5 in einem sogenannten 3D-Druckverfahren, insbesondere in einem selektiven Lasersinterprozess (sogenanntes SLS-Verfahren), in mehreren Schichten gedruckt und hergestellt werden.

Anschließend wird das Sitzelement 2, gebildet aus der Rückwand 1 mit aufkaschiertem Bezug 5 und der Trägerstruktur 3 sowie dem Schaumelement 4, beispielsweise in einem Trimmwerk montiert. Dabei wird die vorgefertigte und vorgeformte Rückwand 1 an die Trägerstruktur 3, die bereits mit dem Schaumelement 4 versehen ist, positioniert und befestigt. Anschließend wird der vordere Bezug 6 auf das Sitzelement 2 und damit auf und über die Rückwand 1, die Trägerstruktur 3 und das Schaumelement 4 gezogen und punktweise befestigt und entlang der Nahtlinien 7 mittels nicht sichtbarer Reißverschlüsse geschlossen (siehe Figur 2A).

### Bezugszeichenliste

- 1: Rückwand
- 1.1: Oberfläche
- 1.2: Ausformung
- 2: Sitzelement
- 3: Trägerstruktur
- 3.1: Seitenrand
- 4: Schaumelement
- 4.1: Schaumrand
- 4.2: Rücken-Anlagefläche
- 4.3: Seitenwulst
- 4.4: Absatz
- 5: rückseitiger Bezug
- 5.1: überstehender Bereich
- 6: vorderseitiger Bezug
- 7: Nahtlinien
- 8: Ausschnitt
- 9: Seiten-Airbagmodul
- 10: Befestigungselement
- 11: Lehnenverstellmechanismus
- 12: Kopfstütze
- 12.1: Kopfstützenaufnahme
- 13: Dämpfungselement
- 14: Airbagkabel
- 15: Kleber
- 16: Schaumkaschierung
- 17: Materialrolle
- 18: Erhitzer
- 19: Stempeleinheit
- 20: Pressmaschine
- a: Abstand
- b: Trägerabstand
- c: Wandabstand
- B: Breite
- D: Dicke
- K: Kunststoffformteil
- BB: Beinbereich

## Patentansprüche

1. Sitzelement (2) für einen Fahrzeugsitz mit
- einer thermisch geformten Rückwand (1) und
- einer Trägerstruktur (3), die auf einer Oberflächenseite der Rückwand (1) mit einem horizontalen Trägerabstand (b) von der Rückwand (1) beabstandet angeordnet ist,
wobei die Trägerstruktur (3) auf einer von der Rückwand (1) abgewandten Seite mit einem Schaumelement (4) versehen ist, welches sich in Längsausdehnung über die Trägerstruktur (3) hinaus, ein oberes Ende der Trägerstruktur (3) überdeckend in Richtung der Rückwand (1) erstreckt, wobei ein das obere Ende der Trägerstruktur (3) überdeckendes Ende des Schaumelementes (4) in einem vertikalen Abstand (a) zu einem oberen Ende der Rückwand (1) angeordnet ist,
wobei die Rückwand (1) eine Ausformung (1.2) aufweist, die als eine in Richtung des Schaumelements (4) verlaufende Materialaussparung ausgebildet ist, wobei die Trägerstruktur (3) an der Rückwand (1) mittels Befestigungselementen (10) befestigt ist, die als Abstandshalter ausgebildet sind, wobei an der Trägerstruktur (3) auf einer vom Schaumelement (4) abgewandten Oberflächenseite ein Dämpfungselement (13) angeordnet ist und wobei das Dämpfungselement (13) eine Matte ist, die ebenfalls in einem Trägerabstand (b) zur Rückwand (1) angeordnet ist.

2. Sitzelement (2) nach Anspruch 1, wobei das Schaumelement (4) und die Trägerstruktur (3) seitlich einen Ausschnitt (8) zur Aufnahme eines Seiten-Airbagmoduls (9) aufweisen.

3. Sitzelement (2) nach einem der vorhergehenden Ansprüche, aufweisend einen vorderseitigen Sitzbezug (6) und einen mit diesem verbundenen rückseitigen Sitzbezug (5).

4. Verfahren zur Herstellung eines Sitzelementes (2) gemäß einem der vorhergehenden Ansprüche, wobei
- die Rückwand (1) als ein Kunststoffformteil (K) ausgebildet wird,
- die Rückwand (1) mit einer Ausformung (1.2) hergestellt wird, die als eine in Richtung des Schaumelements (4) verlaufende Materialaussparung ausgebildet wird,
- die Trägerstruktur (3) mit dem Schaumelement (4) versehen wird,
- die Rückwand (1) an der Trägerstruktur (3) positioniert und mittels Befestigungselementen (10), die als Abstandshalter ausgebildet sind, befestigt wird.

5. Verfahren nach Anspruch 4, wobei die Rückwand (1) in einem Heißpressverfahren hergestellt wird.

6. Verfahren nach Anspruch 4 oder 5, wobei ein rückseitiger Bezug (5) auf eine nach außen gerichtete Oberfläche (1.1) der Rückwand (1) aufkaschiert wird.

7. Verfahren nach einem der Ansprüche 4 bis 6, wobei ein vorderseitiger Bezug (6) auf und über die Rückwand (1), die Trägerstruktur (3) und das Schaumelement (4) gezogen und punktweise befestigt wird.

## Claims

1. Seat element (2) for a vehicle seat, having
- a thermally formed rear wall (1) and
- a carrier structure (3), which is arranged on a surface side of the rear wall (1) so as to be spaced apart by a horizontal carrier distance (b) from the rear wall (1),
wherein the carrier structure (3) is provided, on a side directed away from the rear wall (1) with a foam element (4), which extends longitudinally beyond the carrier structure (3), covering over an upper end of the carrier structure (3), in the direction of the rear wall (1), wherein an end of the foam element (4) which covers over the upper end of the carrier structure (3) is arranged at a vertical distance (a) from an upper end of the rear wall (1), wherein the rear wall (1) has a shaped portion (1.2) which is designed in the form of a material recess running in the direction of the foam element (4), wherein the carrier structure (3) is fastened on the rear wall (1) by means of fastening elements (10) designed in the form of spacers, wherein a damping element (13) is arranged on the carrier structure (3), on a surface side directed away from the foam element (4), and
wherein the damping element (13) is a mat, which is likewise arranged at a carrier distance (b) from the rear wall (1).

2. Seat element (2) according to Claim 1, wherein the foam element (4) and the carrier structure (3) each have a lateral cutout (8) for receiving a side-airbag module (9).

3. Seat element (2) according to either of the preceding claims, having a front-side seat cover (6) and a rear-side seat cover (5), which is connected to the front-side seat cover.

4. Method for producing a seat element (2) according to one of the preceding claims, wherein
- the rear wall (1) is designed in the form of a plastic moulding (K),
- the rear wall (1) is produced with a shaped portion (1.2), which is designed in the form of a material recess running in the direction of the foam element (4),
- the carrier structure (3) is provided with the foam element (4),
- the rear wall (1) is positioned on the carrier structure (3) and fastened by means of fastening elements (10) designed in the form of spacers.

5. Method according to Claim 4, wherein the rear wall (1) is produced by hot pressing.

6. Method according to Claim 4 or 5, wherein a rear-side cover (5) is laminated onto an outwardly directed surface (1.1) of the rear wall (1).

7. Method according to one of Claims 4 to 6, wherein a front-side cover (6) is drawn onto, and over, the rear wall (1), the carrier structure (3) and the foam element (4) and fastened at certain points.

## Revendications

1. Élément de siège (2) pour un siège de véhicule avec :
- une paroi arrière (1) moulée à chaud ; et
- une structure de support (3) disposée à une certaine distance sur un côté de surface de la paroi arrière (1), avec une certaine distance horizontale du support (b) par rapport à la paroi arrière (1) ;
dans lequel la structure de support (3) est pourvue d'un élément en mousse (4) sur un côté opposé à la paroi arrière (1), ledit élément en mousse s'étendant en extension longitudinale sur l'ensemble de la structure de support (3), de façon à recouvrir une extrémité supérieure de la structure de support (3) en direction de la paroi arrière (1), dans lequel une extrémité supérieure de la structure de support (3) recouvrant l'élément en mousse (4) est disposée à une certaine distance verticale (a) par rapport à une extrémité supérieure de la paroi arrière (1), dans lequel la paroi arrière (1) comporte une pièce détourée (1.2) réalisée sous la forme d'un évidement s'étendant en direction de l'élément en mousse (4),
dans lequel la structure de support (3) est fixée à la paroi arrière (1) à l'aide d'éléments de fixation (10) réalisés sous la forme d'entretoises, dans lequel un élément d'amortissement (13) est disposé au niveau de la structure de support (3) sur un côté de surface opposé à l'élément en mousse (4) et dans lequel l'élément d'amortissement (13) est un élément matelassé également disposé à une certaine distance du support (b) par rapport à la paroi arrière (1).

2. Élément de siège (2) selon la revendication 1, dans lequel l'élément en mousse (4) et la structure de support (3) comportent en côté un détouré (8) permettant de loger un module d'airbag latéral (9).

3. Élément de siège (2) selon l'une quelconque des revendications précédentes, comportant une housse de siège avant (6) et une housse de siège arrière (5) y étant reliée.

4. Procédé de fabrication d'un élément de siège (2) selon l'une quelconque des revendications précédentes, dans lequel :
- la paroi arrière (1) est réalisée sous la forme d'une pièce détourée en matière plastique (K) ;
- la paroi arrière (1) est fabriquée au moyen d'une pièce détourée (1.2) réalisée sous la forme d'un évidement de matière s'étendant en direction de l'élément en mousse (4) ;
- la structure de support (3) est pourvue de l'élément en mousse (4) ;
- la paroi arrière (1) est positionnée au niveau de la structure de support (3) et est fixée à l'aide d'éléments de fixation (10) réalisés sous la forme d'entretoises.

5. Procédé selon la revendication 4, dans lequel la paroi arrière (1) est fabriquée au cours d'un procédé de pressage à chaud.

6. Procédé selon la revendication 4 ou 5, dans lequel une housse arrière (5) est contrecollée sur une surface (1.1) de la paroi arrière (1) orientée vers l'extérieur.

7. Procédé selon l'une quelconque des revendications 4 à 6, dans lequel une housse avant (6) est fixée par endroits et étirée sur la paroi arrière (1), la structure de support (3) et l'élément en mousse (4) et au-dessus de ceux-ci.
